## Europäisches Patentamt
## European Patent Office
## Office européen des brevets

(11) Numéro de publication : **0 307 268 B1**

(12)
# FASCICULE DE BREVET EUROPEEN

(45) Date de publication du fascicule du brevet :
23.10.91 Bulletin 91/43

(51) Int. Cl.⁵ : **G21C 3/34, C22F 1/18**

(21) Numéro de dépôt : 88402106.4

(22) Date de dépôt : **12.08.88**

(54) Procédé de fabrication d'une grille-entretoise pour un assemblage combustible d'un réacteur nucléaire.

(30) Priorité : 24.08.87 FR 8711861

(43) Date de publication de la demande :
15.03.89 Bulletin 89/11

(45) Mention de la délivrance du brevet :
23.10.91 Bulletin 91/43

(84) Etats contractants désignés :
BE CH DE ES FR GB IT LI SE

(56) Documents cités :
EP-A- 0 192 499
FR-A- 1 526 419
GB-A- 997 761
JP-A-62 180 027
US-A- 3 121 034

(73) Titulaire : **FRAMATOME**
**Tour Fiat 1, Place de la Coupole**
**F-92400 Courbevoie (FR)**
Titulaire : **COGEMA: Société anonyme dite**
**2 rue Paul Dautier**
**F-78140 Velizy Villacoublay (FR)**

(72) Inventeur : **Bard, Josette**
**13 rue Centrale Beynost**
**F-01710 Miribel (FR)**

(74) Mandataire : **Bouget, Lucien et al**
**Cabinet Lavoix 2, Place d'Estienne d'Orves**
**F-75441 Paris Cédex 09 (FR)**

Jouve, 18, rue Saint-Denis, 75001 PARIS

## Description

L'invention concerne un procédé de fabrication d'une grille-entretoise pour un assemblage combustible d'un réacteur nucléaire refroidi par de l'eau sous pression, constituée par des plaquettes en alliage de zirconium.

Les assemblages combustibles des réacteurs nucléaires refroidis à l'eau sont généralement constitués par un faisceau de tubes renfermant des pastilles de combustible nucléaire appelés crayons, dans lequel les crayons sont disposés parallèlement les uns aux autres et de façon à constituer un réseau régulier, dans les plans de section droite de l'assemblage.

Les crayons sont maintenus transversalement par des grilles-entretoises réparties suivant la longueur de l'assemblage, chacune des grilles reproduisant le réseau dans lequel viennent se placer les crayons combustibles.

Les grilles sont constituées par des plaquettes découpées dans un feuillard et mises en forme pour constituer des parties d'appui des crayons combustibles, telles que des bossettes formées par repoussage du métal de la plaquette. Les plaquettes sont ensuite assemblées par soudage pour constituer le réseau de la grille.

Dans le cas des réacteurs nucléaires à eau sous pression, les grilles-entretoises assurant le maintien des crayons combustibles sont réalisées de manière classique en un alliage à base de nickel à durcissement par précipitation. Ce matériau présente de bonnes propriétés mécaniques qui se maintiennent à un niveau satisfaisant, pendant l'utilisation des assemblages dans le coeur du réacteur.

Dans le but d'améliorer les performances des assemblages combustibles, la tendance est actuellement de remplacer les grilles-entretoises en alliage de nickel par des grilles-entretoises constituées par des plaquettes en alliage de zirconium dont la section de capture des neutrons est beaucoup plus faible. En fait, les assemblages combustibles fabriqués actuellement et utilisés dans les réacteurs nucléaires à eau sous pression comportent pour la plupart des grilles en un alliage de zirconium désigné sous le nom de Zircaloy 4 qui comporte essentiellement, en plus du zirconium, de l'étain, du fer et du chrome.

L'ensemble de la séquence de fabrication de la grille-entretoise, à savoir le découpage, la mise en forme et l'assemblage par soudage des plaquettes, est effectué sur le matériau dans son état métallurgique final, c'est-à-dire sur un alliage traité thermiquement pour obtenir les caractéristiques mécaniques et chimiques voulues.

Afin d'améliorer les performances du combustible nucléaire, la tendance est actuellement d'augmenter les exigences, en ce qui concerne les caractéristiques des éléments de structure tels que les grilles-entretoises.

Principalement, ces exigences sont relatives à l'obtention d'une faible résistance à l'écoulement de l'eau de refroidissement lors de sa traversée de l'assemblage, d'une résistance mécanique accrue et d'une faible altération des propriétés de la grille dans le milieu de fonctionnement, c'est-à-dire dans le coeur du réacteur nucléaire.

L'obtention d'une faible résistance à l'écoulement suppose d'utiliser des plaquettes minces et de géométrie complexe ; le matériau constituant les plaquettes de la grille doit en particulier présenter une grande aptitude à l'emboutissage. Cette exigence est très difficilement conciliable avec l'obtention de bonnes propriétés de résistance mécanique.

En outre, le matériau doit être résistant à l'oxydation et à l'hydruration et ne subir que des variations dimensionnelles très réduites, dans le coeur du réacteur en fonctionnement.

On connaît des alliages de zirconium renfermant du niobium dont les propriétés et notamment la résistance à la corrosion et à l'hydruration, peuvent être ajustées en jouant sur leur état métallurgique.

Dans certains états métallurgiques, ces alliages possèdent également une bonne aptitude au formage à froid.

Enfin, quel que soit l'état métallurgique considéré, les alliages contenant au moins 2% de niobium possèdent une résistance mécanique supérieure — ou très supérieure — à celle du Zircaloy-4 et une croissance sous irradiation plus faible — ou beaucoup plus faible.

Toutefois, jusqu'à présent ces alliages n'ont pas été développés pour les composants des assemblages combustibles pour réacteurs à eau pressurisée (REP), leur tenue à la corrosion généralisée n'étant pas considérée comme suffisamment bonne par rapport à celle du Zircaloy-4 à la température de fonctionnement d'un REP (300°C-330°C). En revanche, la résistance à la corrosion des alliages au niobium à des températures correspondant au fonctionnement des réacteurs à eau bouillante est meilleure que celle du Zircaloy-4 et ces alliages sont généralement utilisés dans les réacteurs de ce type.

Si l'on désire améliorer les performances des grilles ainsi que leur durée de vie, l'utilisation de ces alliages est intéressante car ils présentent une cinétique d'hydruration plus faible que le Zircaloy-4 dans le milieu de fonctionnement d'un REP, pour autant que l'on puisse optimiser les autres propriétés requises, c'est-à-dire :

— l'aptitude au formage du demi-produit (feuillard) et la vitesse de corrosion qui doit être la plus faible possible.

De plus la résistance mécanique et la croissance sous irradiation peuvent être également optimisées, ce qui accroît les avantages de ces alliages au niobium par rapport au Zircaloy-4.

Dans la demande de brevet allemand DE-A-3703168, on préconise l'utilisation d'alliages de zirconium contenant du niobium et de l'étain pour la réalisation de composants pour des assemblages combustibles de réacteurs nucléaires.

Les composants tels que les grilles-entretoises sont constitués par des plaquettes qui sont laminées à froid, découpées et mises en forme après une trempe rapide depuis une température élevée (généralement une trempe à l'eau). Les composants sont soumis à un revenu après assemblage par soudage.

Les alliages décrits contenant de l'étain et soumis à un traitement de trempe rapide dans une première phase ne permettent cependant pas d'obtenir des propriétés nettement améliorées, en particulier dans le cas de leur application aux composants pour assemblages combustibles des réacteurs nucléaires refroidis par de l'eau sous pression.

Le but de l'invention est de proposer un procédé de fabrication d'une grille-entretoise pour un assemblage combustible d'un réacteur nucléaire à eau sous pression constituée par des plaquettes en un alliage à base de zirconium contenant de 2 à 3% de niobium, le procédé consistant à découper et à former à froid un produit plat dudit alliage à base de zirconium pour obtenir les plaquettes, puis à assembler les plaquettes pour réaliser le réseau de la grille, ce procédé permettant d'obtenir des formes complexes pour les plaquettes ainsi qu'une résistance mécanique et chimique de la grille adaptées aux conditions d'utilisation dans le réacteur nucléaire en positionnement.

Dans ce but, l'alliage à base de zirconium est exempt d'étain et, préalablement à son formage à froid pour réaliser les plaquettes, le produit plat est refroidi à une vitesse contrôlée et modérée inférieure à 110°C/s. depuis une température comprise entre 610 et 930°C à laquelle l'alliage de zirconium est sous forme α + β, enfin, après assemblage des plaquettes, la grille dans son ensemble est soumise à un revenu en phase α, à une température comprise entre 400 et 550°C, pendant une durée de dix à trente heures.

Afin de bien faire comprendre l'invention, on va maintenant décrire, à titre d'exemple non limitatif, en se référant aux figures jointes en annexe un mode de mise en oeuvre du procédé selon l'invention permettant la fabrication d'une grille-entretoise d'un assemblage combustible d'un réacteur nucléaire à eau sous pression.

La figure 1 est une vue en perspective d'une grille-entretoise d'un assemblage combustible pour un réacteur nucléaire à eau sous pression.

La figure 2 est un diagramme d'équilibre zirconium-niobium montrant les principales phases d'un alliage de zirconium utilisé pour la fabrication d'une grille-entretoise telle que représentée sur la figure 1.

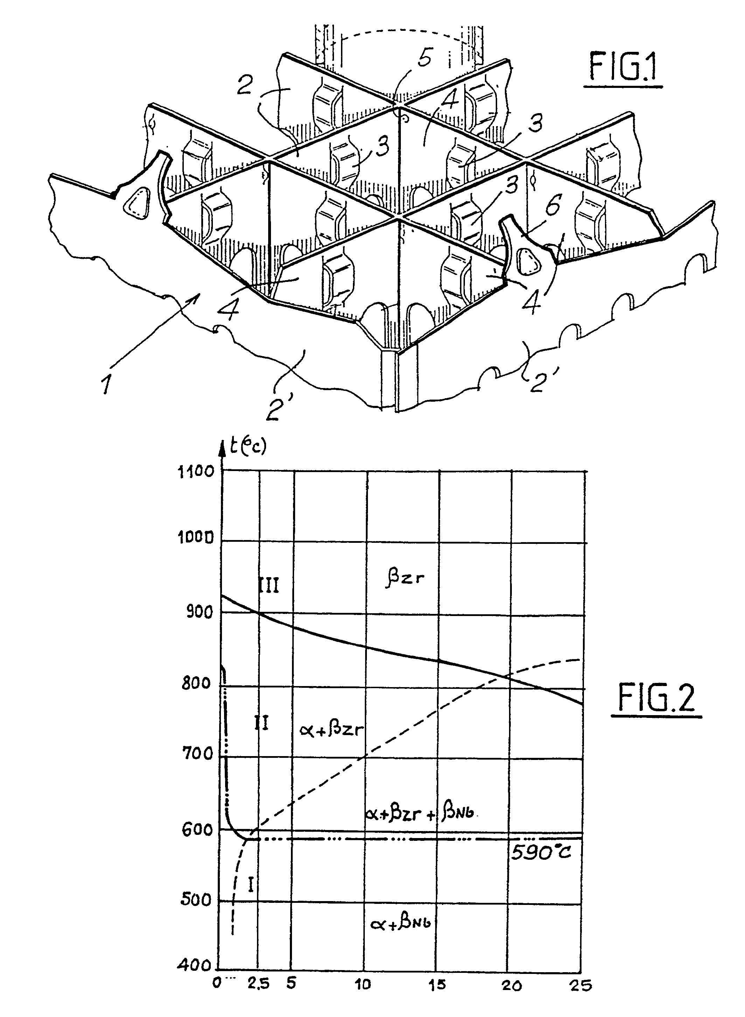

Sur la figure 1, on voit une grille-entretoise désignée de manière générale par le repère 1 constituée par des plaquettes 2 découpées et mises en forme avant l'assemblage de la grille. Le réseau de la grille est à mailles carrées, les plaquettes 2 assemblées entre elles constituant des cellules 4 dans chacune desquelles un crayon combustible ou un tube guide peut être introduit et maintenu transversalement.

Les plaquettes 2 sont assemblées entre elles au niveau de fentes d'assemblage dont la position correspond aux angles des cellules 4. L'assemblage des plaquettes constituant la grille est assuré par des cordons de soudure 5, dans la zone de jonction des plaquettes 2. Les plaquettes 2 comportent des bossettes 3 en saillie vers l'intérieur des cellules 4 permettant l'appui et le maintien des crayons combustibles, ces bossettes étant réalisées par découpage et repoussage du métal des plaquettes, avant assemblage.

Les plaquettes sont également découpées et pliées pour constituer des ailettes de mélange 6 de l'eau de refroidissement du réacteur en circulation dans l'assemblage correspondant.

Les plaquettes 2 sont réalisées par découpage puis formage à froid d'un feuillard en alliage de zirconium.

Les plaquettes 2 constituant les entretoises internes de la grille peuvent être réalisées à partir d'un feuillard dont l'épaisseur est de l'ordre de 0,3 à 0,5 mm. Les plaquettes 2' constituant le cadre extérieur de la grille-entretoise 1 ont une épaisseur un peu supérieure de l'ordre de 0,6 à 0,8 mm.

Pour la mise en oeuvre du procédé suivant l'invention, on utilise un feuillard en alliage binaire Zirconium-Niobium, la teneur en niobium étant de l'ordre de 2,5% en poids.

De manière plus générale, les alliages de zirconium utilisés dans la mise en oeuvre du procédé suivant l'invention pourront contenir de 2 à 3% de niobium et, de façon préférentielle, de 2,35 à 2,75% de niobium.

Ces alliages renferment également de l'oxygène dans une proportion de 0,09 à 0,13% en poids.

Ces alliages renferment également des teneurs très faibles d'autres éléments d'alliage ou d'impuretés. Un exemple de composition d'un alliage suivant l'invention est donné ci-dessous, les teneurs des différents éléments étant indiquées en pourcentages pondéraux :
Niobium : 2,5%, Oxygène : 0,12%, Fer : 0,08%, Carbone : 0,05%, Chrome : 0,02%, Hafnium : 0,02%, Plomb : 0,013%, Silicium : 0,012%, Tungstène : 0,010%, tantale : 0,02% ainsi que de faibles quantités d'hydrogène et d'azote (25 ppm maximum).

En particulier, les alliages utilisés dans le cadre de l'invention ne renferment de l'étain qu'à titre d'impureté résiduelle, la teneur maximale acceptable d'étain étant de l'ordre de 0,02%.

L'analyse type ci-dessus n'est donnée qu'à titre d'exemple, les teneurs faibles en certains éléments pouvant être variables, en fonction du mode d'obtention de l'alliage et de l'état et de la composition des produits de départ pour l'obtention de cet alliage.

Sur la figure 2, on a représenté une partie du diagramme d'équilibre zirconium-niobium au-dessus de 400°C et pour les teneurs faibles en niobium.

Les principales phases de l'alliage qui sont mentionnées sur ce diagramme sont tout d'abord les phases riches en zirconium α et β Zr.

La phase α Zr stable à basse température est une phase à structure hexagonale compacte alors que la phase β Zr stable à haute température est une phase cubique centrée.

On a également indiqué sur le diagramme d'équilibre de la figure 2, une phase β Nb qui est une phase riche en niobium (environ 90% de niobium) à structure cubique centrée.

Pour un alliage à 2,5% de niobium tel que mentionné ci-dessus, on peut distinguer trois domaines successifs I, II, III. Le domaine I au-dessus de 400°C et jusqu'à 590°C environ est un domaine biphasique α + β Nb, l'alliage comportant principalement dans cette zone une phase α riche en zirconium et une phase β riche en niobium à structure cubique.

Le domaine II est également un domaine biphasique où l'alliage est principalement constitué d'une phase α riche en zirconium et d'une phase β cubique riche en zirconium. Le domaine II s'étend approximativement de 600 à 900°C.

Le domaine III au-dessus de 900°C correspond à la phase riche en zirconium à structure cubique centrée.

Pour la mise en oeuvre du procédé de fabrication suivant l'invention, le feuillard de départ en alliage zirconium-niobium laminé à froid est porté à une température correspondant au domaine II dans lequel l'alliage est sous forme biphasique α + β Zr. La bande de feuillard est ensuite refroidie depuis cette température qui peut être comprise par exemple entre 600 et 900°C. De façon plus précise, on a pu déterminer que la température de départ doit dans tous les cas être comprise entre 610 et 930°C, pour obtenir la structure désirée.

Généralement, on préférera une température plus proche de la limite supérieure du domaine et on choisira un temps de maintien à cette température suffisant pour obtenir une homogénéisation complète de l'alliage (par exemple 20 mn à 875°C).

Le feuillard est ensuite refroidi à vitesse contrôlée et modérée jusqu'à la température ambiante, par exemple 20°C.

La structure de l'alliage est alors constituée par une phase $\beta_{Zr}$ transformée, métastable, de structure aciculaire, contenant des grains équiaxes de phase α.

Le niobium est en sursaturation dans la phase $\beta_{Zr}$.

La teneur en niobium dans la phase α et dans la phase $\beta_{Zr}$, et la proportion de phase $\beta_{Zr}$ par rapport à la phase α dépendent de la température de maintien avant refroidissement et de la vitesse de refroidissement.

C'est l'ajustement de ces paramètres qui permet:
— d'obtenir une bonne aptitude à la déformation ainsi qu'une relative isotropie sur le demi-produit (feuillard)
— et d'obtenir les propriétés finales sur produit fini (grille) grâce à l'apport supplémentaire du revenu.

On évitera en particulier des vitesses de refroidissement trop élevées, par exemple la trempe à l'eau qui n'est pas adaptée. La vitesse de refroidissement devra toujours être inférieure à 110°C/s.

Cette vitesse pourra être dans certains cas notablement inférieure à cette limite et par exemple inférieure à 50°C/sec.

D'excellentes propriétés ont été obtenues lorsque le refroidissement a été effectué à une vitesse de 15°C/s.

Les plaquettes 2 et 2′ sont découpées et formées à froid, dans le feuillard à l'état α + $\beta_{Zr}$. En particulier, les bossettes 3 d'appui des crayons combustibles sont formées par découpage et repoussage des plaquettes 2. Il en résulte un écrouissage local au niveau de ces bossettes.

On effectue ensuite le montage de la grille pour réaliser une structure, par exemple telle que représentée sur la figure 1. Les plaquettes 2 et 2′ sont reliées entre elles par soudage ou brasage, cette opération de soudage ou de brasage ayant pour résultat de porter localement le métal à une température correspondant au domaine III du diagramme d'équilibre où l'alliage est sous forme β Zr.

Les grilles assemblées et soudées sont ensuite portées dans leur ensemble à une température comprise entre 400 et 550°C, à l'intérieur d'un four de traitement thermique. Les grilles sont maintenues dans le four pendant dix à trente heures, la température correspondant à une température de revenu en phase α.

Ce traitement en phase α entraîne une formation de précipités β Nb par décomposition de la phase β Zr métastable : β Zr → β Nb + α.

Les conditions combinées du traitement sur feuillard et sur grille permettent d'obtenir une précipitation importante de β Nb et, par conséquent, une diminution de la teneur en niobium dans la phase α.

Cette microstructure confère à l'ensemble de la grille une bonne tenue à la corrosion généralisée compatible avec son utilisation en milieu REP. L'alliage conserve d'autre part une isotropie satisfaisante, ce qui garantit un bon comportement des entretoises dans le réacteur nucléaire en service.

Le revenu peut provoquer également un durcissement additionnel modéré dans le matériau, ce qui est bénéfique vis-à-vis de la résistance mécanique de la grille. Ce durcissement sera plus sensible dans les zones soudées, ce qui augmentera la résistance à la déformation latérale du réseau de plaquettes.

D'autre part, le traitement de revenu final en phase α permet de réaliser la détente des soudures, de façon à leur assurer un comportement acceptable en fonctionnement. Comme indiqué plus haut, les soudures présentent une structure β Zr avant revenu.

Les zones écrouies et en particulier les zones des plaquettes embouties pour constituer les bossettes présentent, après revenu, des caractéristiques plus élevées que le matériau de base des plaquettes n'ayant pas subi de déformation à froid.

Les caractéristiques du traitement de revenu final sont d'ailleurs adaptées de façon à ne pas provoquer de survieillissement des zones écrouies. Ces zones correspondant aux bossettes présenteront donc une raideur plus élevée que les parties non déformées de la plaquette, ce qui assure un meilleur comportement pour le maintien des crayons combustibles.

Dans les zones écrouies, l'isotropie du matériau a été diminuée si bien qu'il faut s'attendre à une stabilité dimensionnelle plus médiocre dans ces zones.

Dans le cas des bossettes, une croissance locale plus importante pourrait compenser une partie de la relaxation qui est toujours élevée dans le cas d'un alliage à base de zirconium.

Le procédé suivant l'invention a donc l'avantage de permettre un formage des plaquettes, l'alliage de zirconium étant dans un premier état métallurgique où sa formabilité est satisfaisante et l'obtention, par un second traitement thermique, sur les grilles assemblées :

— d'une résistance à la corrosion généralisée convenable ;

— d'une résistance à l'hydruration meilleure que celle du Zircaloy-4 ;

— d'une résistance mécanique légèrement supérieure dans le métal, et sensiblement supérieure dans les soudures, par rapport aux grilles en Zircaloy-4 ;

— une croissance sous irradiation très modérée (bonne isotropie) ;

— une raideur locale accrue des bossettes de maintien des crayons.

D'autre part, la composition et la gamme de fabrication de l'alliage sont également ajustées pour obtenir un comportement satisfaisant et en particulier une bonne résistance à l'oxydation et à l'hydruration, dans les conditions d'utilisation à l'intérieur du coeur du réacteur.

En plus des éléments indiqués ci-dessus, on pourra ajouter des teneurs faibles mais déterminantes de cuivre et/ou de vanadium.

Il est à remarquer que le niobium et l'oxygène présents dans l'alliage ont une influence importante sur les températures de traitement.

De manière générale, le niobium a tendance à augmenter la stabilité de la phase β et l'oxygène augmente très fortement la température de transition α/α + β.

C'est ainsi que la température de transition se situe vers 615°C pour les faibles teneurs en oxygène (proches de 0,09%) mais que cette température de transition se situe au-delà de 750°C pour une teneur en oxygène de 0,18%.

Il est bien évident que le procédé de fabrication suivant l'invention pourra être adapté à la fabrication de toute grille-entretoise pour assemblage combustible quelle que soit la forme des cellules, la disposition des bossettes ou le mode de coopération des bossettes et de ressorts, ces ressorts étant généralement en alliage de nickel et rapportés sur les plaquettes constituant les parois des cellules de la grille.

## Revendications

1. Procédé de fabrication d'une grille-entretoise (1) pour un assemblage combustible d'un réacteur nucléaire à eau sous pression constituée par des plaquettes (2, 2') en un alliage à base de zirconium contenant de 2 à 3% de niobium, le procédé consistant à découper et à former à froid un produit plat dudit alliage de zirconium pour obtenir les plaquettes (2, 2') puis à assembler les plaquettes (2, 2') pour réaliser le réseau de la grille (1), caractérisé par le fait que l'alliage de Zirconium est exempt d'étain et, que, préalablement à son formage à froid pour réaliser les plaquettes, le produit plat est refroidi à une vitesse contrôlée et modérée inférieure à 110°C/s depuis une température comprise entre 610 et 930°C à laquelle l'alliage de zirconium est sous forme α + β et qu'après assemblage des plaquettes (2, 2') la grille dans son ensemble est soumise à un revenu en phase α, à une température comprise entre 400 et 550°C, pendant une durée de dix à trente heures.

2. Procédé de fabrication selon la revendication 1, caractérisé par le fait que l'alliage de zirconium renferme de 2,35 à 2,75% de niobium et 0,09 à 0,13% d'oxygène.

3. Procédé de fabrication selon la revendication 2, caractérisé par le fait que l'alliage de zirconium renferme à peu près 2,5% de niobium et 0,12% d'oxygène.

4. Procédé de fabrication selon l'une quelconque des revendications 1, 2 et 3, caractérisé par le fait que l'alliage de zirconium renferme du fer, du chrome et du molybdène.

5. Procédé de fabrication selon l'une quelconque des revendications 1 à 4, caractérisé par le fait que l'alliage de zirconium renferme en outre du cuivre et/ou du vanadium.

6. Procédé suivant l'une quelconque des revendications 1 à 5 caractérisé par le fait que le produit plat est refroidi à une vitesse inférieure à 50°C/s.

## Claims

1. A method of manufacturing a cross-bracing grid (1) for a fuel assembly of a pressurized water nuclear reactor, the grid consisting of zirconium-base alloy plates (2, 2') which contain 2 to 3% of niobium, the method consisting in cutting and cold-forming a flat product of said zirconium alloy to form the plates (2, 2'), then assembling the plates (2, 2') to form the lattice of the grid (1), characterized in that the zirconium alloy is tin-free and that prior to its cold-forming to produce the plates, the flat product is cooled at a regulated and moderate rate of less than 110°C/s from a temperature between 610°C and 930°C at which the zirconium alloy is in the $\alpha + \beta$ form, and in that, after the plates (2, 2') have been assembled, the grid as a whole is subjected to an ageing in the $\alpha$ phase at a temperature between 400 and 550°C for a period of from ten to thirty hours.

2. A method of manufacture according to claim 1, characterized in that the zirconium alloy contains 2.35 to 2.75% of niobium and 0.09 to 0.13% of oxygen.

3. A method of manufacture according to claim 2, characterized in that the zirconium alloy contains approximately 2.5% of niobium and 0.12% of oxygen.

4. A method of manufacture according to claims 1, 2 and 3, characterized in that the zirconium alloy contains iron, chromium and molybdenum.

5. A method of manufacture according to any of claims 1 to 4, characterized in that the zirconium alloy additionally contains copper and/or vanadium.

6. A method of manufacture according to any of claims 1 to 5, characterized in that the flat product is cooled at a rate below 50°C/s.

## Patentansprüche

1. Verfahren zur Herstellung eines Abstandshalters (1) für eine Brennelementkassette eines Druckwasserkernreaktors, mit Platten (2, 2') aus einer Legierung auf Zirkoniumbasis mit 2 bis 3% Niob, wobei das Verfahren darin besteht, durch Schneiden und Kaltverformen ein flaches Teil aus dieser Zirkoniumlegierung zu formen, um die Platten (2, 2') zu erhalten und diese zu einem Gitter des Abstandshalters (1) zusammenzufügen, dadurch **gekennzeichnet**, daß die Zirkoniumlegierung kein Zinn enthält und dadurch, daß vor dem Kaltverformen zur Herstellung der Platten das flache Material mit einer vorbestimmten Geschwindigkeit unter 110°C langsam abgekühlt wird, ausgehend von einer Temperatur zwischen 610 und 930°C, bei der die Zirkoniumlegierung in Form einer $\alpha + \beta$-Phase vorliegt und wobeinach dem Zusammensetzen der Platten (2, 2') das fertige Gitter wieder in die $\alpha$-Phase bei einer Temperatur zwischen 400 und 550°C während eines Intervalls zwischen 10 und 30 Stunden überführt wird.

2. Verfahren nach Anspruch 1, dadurch gekennzeichnet, daß die Zirkoniumlegierung zwischen 2,35 und 2,75% Niob und 0,09 bis 0,13% Sauerstoff enthält.

3. Verfahren nach Anspruch 2, dadurch gekennzeichnet, daß die Zirkoniumlegierung etwa 2,5% Niob und 0,12% Sauerstoff aufweist.

4. Verfahren nach einem der Ansprüche 1, 2 und 3, dadurch gekennzeichnet, daß die Zirkoniumlegierung Eisen, Chrom und Molybdän aufweist.

5. Verfahren nach einem der Ansprüche 1 bis 4, dadurch gekennzeichnet, daß die Zirkoniumlegierung außerdem Kupfer und/oder Vanadium aufweist.

6. Verfahren nach einem der Ansprüche 1 bis 5, dadurch gekennzeichnet, daß das Flachmaterial mit einer Geschwindigkeit kleiner als 50°C pro Sekunde abgekühlt wird.

FIG.1

FIG.2